(19) Europäisches Patentamt
European Patent Office
Office européen des brevets

(11) **EP 1 768 118 A2**

(12) **EUROPEAN PATENT APPLICATION**

(43) Date of publication:
**28.03.2007 Bulletin 2007/13**

(51) Int Cl.:
***G11B 7/135*** (2006.01)

(21) Application number: **06017434.9**

(22) Date of filing: **22.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.08.2005 JP 2005239595**

(71) Applicant: **Funai Electric Co., Ltd.
Daito-shi
Osaka 574-0013 (JP)**

(72) Inventors:
• **Nagashima, Kenji
Daito-shi
Osaka 574-0013 (JP)**
• **Fujii, Hitoshi
Daito-shi
Osaka 574-0013 (JP)**

• **Tanaka, Fuminori
Daito-shi
Osaka 574-0013 (JP)**
• **Sugiyama, Susumu
Faculty of Science and Engineer.
Shiga 525-8577 (JP)**
• **Ishii, Akira
Faculty of Science and Engineering
Shiga 525-8577 (JP)**
• **Tanaka, Katsuhiko
Faculty of Science and Engineer.
Shiga 525-8577 (JP)**
• **Kuze, Wataru
Daito-shi
Osaka 574-0013 (JP)**

(74) Representative: **Beetz & Partner
Steinsdorfstrasse 10
80538 München (DE)**

(54) **Optical pickup device**

(57) An optical pickup device has a variable-shape mirror (6) that reflects a light beam emitted from a light source and that, by use of piezoelectric elements (13) sandwiched between a support substrate (11) and a mirror portion (12) arranged to face the support substrate, corrects for wavefront aberrations in the light beam by deforming a mirror surface of the mirror portion, and converging means for directing, while condensing, the light beam reflected from the variableshape mirror to a recording surface of an optical recording medium. Let a direction perpendicular to the travel direction of the light beam emitted from the light source be the X direction on the mirror surface and let the direction perpendicular to the X direction be the Y direction on the mirror surface, the mirror surface is inclined about the X direction such that the mirror surface forms a predetermined angle relative to the travel direction of the light beam emitted from the light source. The piezoelectric elements are arranged symmetrically about the center axis of the mirror surface, with two of them arranged in the X direction and another two in the Y direction. The piezoelectric elements are arranged on the support substrate such that, when all of them are driven with equal voltages, the curvature of the mirror surface in the X direction relative to the curvature of the mirror surface in the Y direction fulfills a predetermined curvature ratio.

FIG. 2A

**Description**

**BACKGROUND OF THE INVENTION**

1. Field of the Invention

The present invention relates to an optical pickup device that is used to read information from and record information to an optical recording medium such as a DVD or CD-ROM, and more particularly to an optical pickup device that can correct for wavefront aberrations by the use of a variable-shape mirror.

2. Description of Related Art

As conventional optical recording media, music CDs (compact discs) and video DVDs (digital versatile discs) have long been in practical use and, in recent years, as higher-capacity, higher-quality DVDs, blue-laser DVDs have been developed. As drive apparatuses that offer access to such optical recording media as CDs, DVDs, and blue-laser DVDs, optical disc apparatuses have been in wide use. An optical disc apparatus records information to and erases information from an optical recording medium by shining laser light on a recording surface thereof, and retrieves information from an optical recording medium based on light reflected from a recording surface thereof. To achieve these capabilities, an optical disc apparatus incorporates an optical pickup device as a device for shining laser light on a recording surface of an optical recording medium to form a light spot thereon and for receiving light reflected from the recording surface.

In such an optical pickup device, in particular when, among different optical recording media, a blue-laser DVD is handled, the numerical aperture (NA) is so high that the spherical aberration resulting from a tiny variation in the substrate thickness of the optical disc exerts a noticeable influence, so great as to make it impossible to condense laser light into a fine spot, inconveniently resulting in increased jitter in the playback signal, a lower peak power during recording, and unacceptably low recording and playback quality.

Moreover, a warp or the like in an optical disc may cause the optical axis of an optical pickup device to be inclined relative to the optical disc surface, bending the optical path of laser light and thereby producing coma aberration. This too makes it impossible to condense laser light into a proper spot diameter, inconveniently resulting in unacceptably low recording and playback quality. Furthermore, the high precision required in the arrangement of optical components, such as an optical lens and a polarizing beam splitter, in an optical pickup device produces astigmatism, inconveniently resulting in low recording and playback quality. As means for correcting for wavefront aberrations such as spherical aberration, there have conventionally been proposed means employing a variable-shape mirror.

For example, JP-A-H5-333274 proposes a variable-shape mirror that achieves phase control by deforming the mirror itself with multilayer piezoelectric elements. This variable-shape mirror, however, is not suitable for use in a small component because it pays no attention to wiring in such use. Using this variable-shape mirror in an optical pickup device complicates the design of the optical pickup device and its assembly cost. Even if the difficulties with wiring and the like are overcome, the multilayer piezoelectric elements need to be made considerably small, which is difficult not only technically but also in terms of cost.

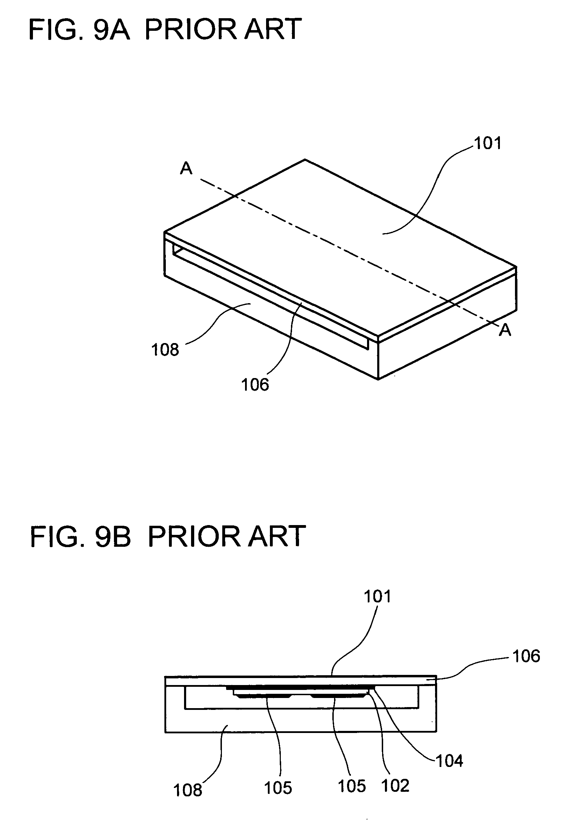

As variable-shape mirrors designed in particular to correct for coma aberration, there have also been proposed variable-shape mirrors having a unimorph or bimorph structure. A bimorph variable-shape mirror is structured, for example, as shown in FIGS. 9A and 9B. FIG. 9A is a perspective view, an FIG. 9B is a cross-sectional view along line A-A shown in FIG. 9A. Here, reference numeral 101 represents a mirror member, reference numeral 102 represents a piezoelectric element, reference numeral 104 represents a common electrode, reference numeral 105 represents individual electrodes, reference numeral 106 represents a mirror substrate, and reference numeral 108 represents a mirror support base.

Purportedly, this variable-shape mirror operates on a low voltage and is advantageous for miniaturization. To permit the mirror surface to be deformed with a low voltage, however, the mirror substrate 106 is formed thin, inconveniently resulting in poor flatness in the mirror portion under the influence of the stresses produced when the mirror member 101, the common electrode 104, etc. are laid and under the influence of the strain produced when the mirror is fixed. To overcome this, JP-A-2005-43544 proposes a technique whereby, for the purpose of maintaining the flatness of the mirror portion, a sensor for sensing the displacement of the mirror is provided that is formed of the same piezoelectric material as the driving piezoelectric element for deforming the mirror. Structured in this way, the variable-shape mirror requires much wiring, and thus building an optical pickup device with it causes inconveniences as by complicating the design of the device.

Out of the above considerations, it is also possible to build an optical pickup device by the use of a variable-shape mirror that deforms a mirror surface by exploiting the vertical displacement of a plurality of piezoelectric elements sandwiched between a support substrate and a mirror portion arranged to face it.

When this variable-shape mirror is arranged in an optical pickup device, it is usually arranged with the mirror inclined relative to the optical axis. Thus, simply by applying equal voltages to the individual piezoelectric elements to deform the mirror into a spherical shape, it is usually impossible to correct for spherical aberration. To correct for spherical aberration, it is necessary to increase the number of piezoelectric elements, and to provide a plurality of amplifiers with different gains to produce large differences among the voltages applied to the individual piezoelectric elements. This inconveniently increases the number of components of the optical pickup device, increases the size of the device itself, and complicates the device.

## SUMMARY OF THE INVENTION

In view of the conventionally encountered inconveniences mentioned above, it is an object of the present invention to provide an optical pickup device that can correct for wavefront aberrations by the use of a variable-shape mirror that deforms the mirror surface thereof by exploiting the vertical displacement of piezoelectric elements, wherein the variable-shape mirror includes a small number of piezoelectric elements and operates with small differences among the voltages applied to the individual piezoelectric elements to correct for wavefront aberrations.

To achieve the above object, an optical pickup device is provided with: a variable-shape mirror that reflects a light beam emitted from a light source and that, by use of piezoelectric elements sandwiched between a support substrate and a mirror portion arranged to face the support substrate, corrects for wavefront aberrations in the light beam by deforming a mirror surface of the mirror portion; and converging means for directing, while condensing, the light beam reflected from the variable-shape mirror to a recording surface of an optical recording medium. Here, let a direction perpendicular to the travel direction of the light beam emitted from the light source be the X direction on the mirror surface and let the direction perpendicular to the X direction be the Y direction on the mirror surface, the mirror surface is inclined about the X direction such that the mirror surface forms a predetermined angle relative to the travel direction of the light beam emitted from the light source. Moreover, the piezoelectric elements are arranged symmetrically about the center axis of the mirror surface, with two of them arranged in the X direction and another two in the Y direction. Furthermore, the piezoelectric elements are arranged on the support substrate such that, when all the piezoelectric elements are driven with equal voltages, the curvature of the mirror surface in the X direction relative to the curvature of the mirror surface in the Y direction fulfills a predetermined curvature ratio.

With this structure, in the optical pickup device, even when the variable-shape mirror is arranged inclined relative to the travel direction of the light beam emitted from the light source, by driving all the piezoelectric elements with equal voltages, it is possible to correct for spherical aberration. Thus, it is possible to correct for spherical aberration with a small number of piezoelectric elements and with a lower load during the driving of the piezoelectric elements. Hence, it is possible to simplify the structure of the optical pickup device that can correct for spherical aberration without increasing the number of components thereof, and to make it compact. With the piezoelectric elements arranged in this way, even when the optical pickup device of the invention corrects for aberrations other than spherical aberration, such as coma and astigmatism, by the use of the variable-shape mirror, it is possible to correct for them without producing large differences among the voltages applied to the piezoelectric elements.

## BRIEF DESCRIPTION OF THE DRAWINGS

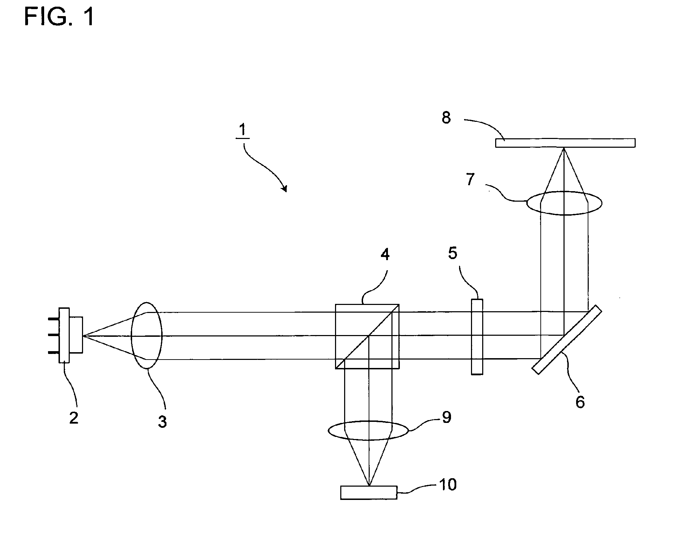

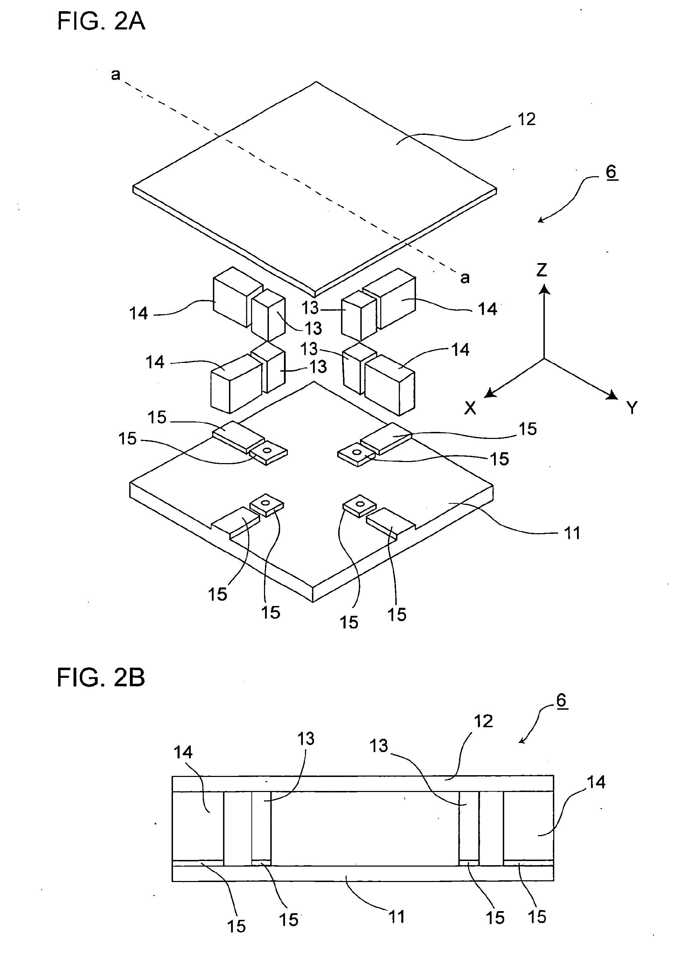

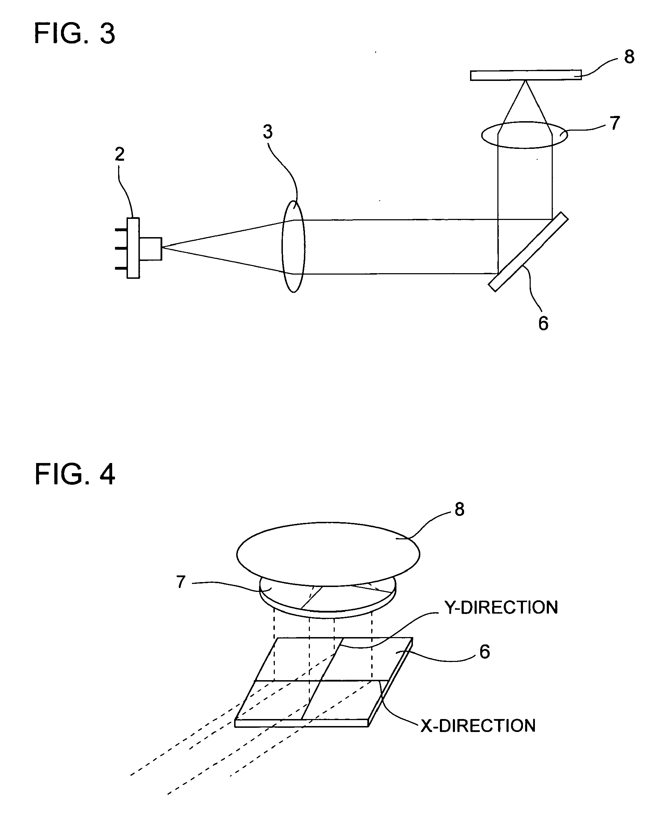

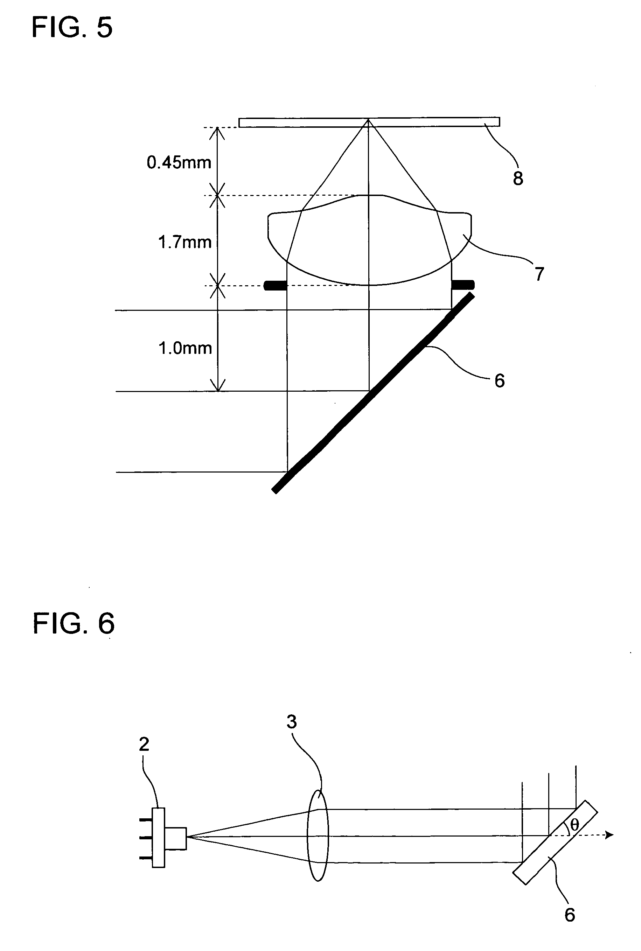

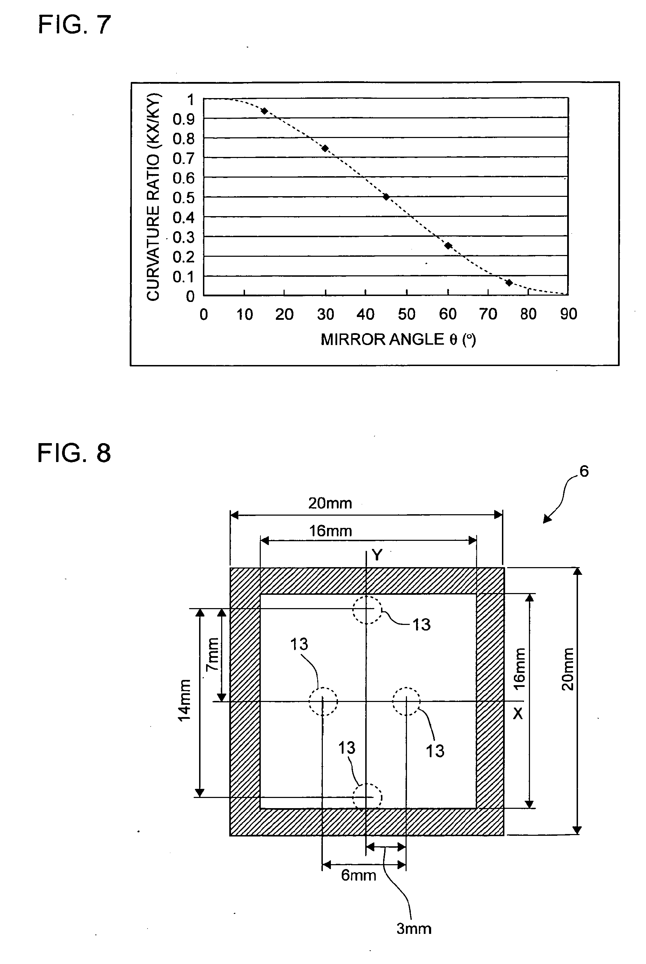

FIG. 1 is a schematic diagram showing the optical system of an optical pickup device embodying the invention; FIG. 2A is a perspective view showing the structure of a variable-shape mirror of the embodiment; FIG. 2B is a cross-sectional view taken along line a-a shown in FIG. 2A, showing the individual components assembled together; FIG. 3 is a schematic diagram of the optical system of the optical pickup device used in a simulation for finding the optimal arrangement of the piezoelectric elements provided in the variable-shape mirror; FIG. 4 is a diagram illustrating the arrangement of the variable-shape mirror during the simulation; FIG. 5 is a diagram illustrating the relationship among the variable-shape mirror, the objective lens, and the optical recording medium during the simulation; FIG. 6 is a diagram illustrating the travel direction of the light beam and the inclination of the variable-shape mirror during the simulation; FIG. 7 is a diagram illustrating the relationship between the mirror angle found through the simulation and the curvature ratio of the X-direction and Y-direction curvatures of the variable-shape mirror; FIG. 8 is a front view showing the structure of the variable-shape mirror used in the simulation, as seen from the mirror surface side thereof; FIG. 9A is a schematic perspective view showing the structure of a conventional variable-shape mirror; and FIG. 9B is a cross-sectional view along line A-A shown in FIG. 9A.

**DETAILED DESCRIPTION OF PREFERRED EMBODIMENTS**

Hereinafter, embodiments of the present invention will be described with reference to the accompanying drawings. It should be understood that the structures described below are all merely examples of how the present invention can be practiced, with no limitation thereto intended.

FIG. 1 is a schematic diagram showing the optical system of an optical pickup device embodying the invention. In FIG. 1, the optical pickup device 1 shines a laser beam on an optical recording medium 8 such as a CD, DVD, or blue-laser DVD and receives light reflected therefrom in order to read information from a signal recording surface of the optical recording medium 8 and to write information to a recording surface of the optical recording medium 8. The optical pickup device 1 is provided with, for example, a laser light source 2, a collimator lens 3, a beam splitter 4, a quarter-wave plate 5, a variable-shape mirror 6, an objective lens 7, a condenser lens 9, and a photodetector 10.

The laser light source 2 is a semiconductor laser diode that emits a laser beam of a predetermined wavelength. For example, for CDs, a semiconductor laser diode that emits a laser beam of a wavelength of 785 nm is used; for DVDs, one that emits a laser beam of a wavelength of 650 nm is used; and for blue-laser DVDs, one that emits a laser beam of a wavelength of 405 nm is used. In this embodiment, a single laser light source 2 emits a laser beam of one wavelength; instead, a laser light source that emits laser beams of a plurality of wavelengths may be used. The light beam emitted from the laser light source 2 is directed to the collimator lens 3.

The collimator lens 3 converts the light beam emitted from the laser light source 2 into parallel light. Here, parallel light denotes light of which all constituent rays are parallel to the optical axis thereof. The parallel light exiting from the collimator lens 3 is directed to the beam splitter 4.

The beam splitter 4 transmits the laser beam that has passed through the collimator lens 3; the beam splitter 4 also reflects the laser beam reflected from the optical recording medium 8 to direct it to the photodetector 10. The light beam having passed through the beam splitter 4 is directed to the quarter-wave plate 5.

The quarter-wave plate 5 shifts the phase of the vertically polarized component of the laser beam by 90°. The light beam having passed through the quarter-wave plate 5 is directed to the variable-shape mirror 6.

The variable-shape mirror 6 reflects the laser beam having passed through the quarter-wave plate 5 to direct it to the objective lens 7. Meanwhile, the variable-shape mirror 6 deforms the mirror surface thereof to correct for wavefront aberrations in the light beam. The variable-shape mirror 6 will be described in detail later.

The objective lens 7 condenses the light beam reflected from the variable-shape mirror 6 on an information recording surface formed inside the optical recording medium 8.

The light beam reflected from the optical recording medium 8 passes through the objective lens 7, and is then reflected by the variable-shape mirror 6. The light beam reflected from the variable-shape mirror 6 passes through the quarter-wave plate 5, is then reflected by the beam splitter 4, and is directed to the condenser lens 9. The condenser lens 9 condenses the light beam reflected from the optical recording medium 8 on the photodetector 10.

The photodetector 10 receives the light beam, converts optical information into an electrical signal, and outputs it to, for example, an RF amplifier provided in an optical disc apparatus. This electrical signal contains information obtained through playback of the data recorded on the recording surface and information (servo information) necessary to control the positions of the optical pickup device 1 itself and the objective lens 7.

Next, the variable-shape mirror 6 will be described in detail. FIGS. 2A and 2B are diagram showing the structure of the variable-shape mirror of this embodiment. It should be noted that the sizes, thicknesses, and other dimensions of individual components shown in the figures are exaggerated for easy understanding, and are therefore different from those actually observed. FIG. 2A is a perspective view of the variable-shape mirror of this embodiment, with the individual components thereof exploded. FIG. 2B is a cross-sectional view along line a-a shown in FIG. 2A, with the individual components put together.

The variable-shape mirror 6 corrects for aberrations produced within the optical pickup device 1 (see FIG. 1). The variable-shape mirror 6 achieves this by deforming the mirror surface of a mirror portion 12 thereof by exploiting the vertical displacement of piezoelectric elements 13. In this embodiment, the variable-shape mirror 6 also serves as an up-directing mirror by reflecting the light beam emitted from the laser light source 2 (see FIG. 1) to direct it to the optical recording medium 8 (see FIG. 1).

Now, the individual components of the variable-shape mirror 6 will be described. Reference numeral 11 represents a support substrate to which piezoelectric elements 13 and fitting portions 14 are fitted. The support substrate 11 is formed of an insulating material such as glass or ceramic. Also provided on the support substrate 11 are, for example, elevations 15 on which the piezoelectric elements 13 and the fitting portions 14 are arranged, and electrodes and conductors (unillustrated) needed to drive the piezoelectric elements 13.

The mirror portion 12 reflects the light beam emitted from the light source, while the mirror surface of the mirror portion 12 is deformed by the piezoelectric elements 13. Here, through the adjustment of the amount of deformation of the mirror surface, the aberrations produced in the optical pickup device 1 (see FIG. 1) are corrected for. Considering that the mirror portion 12 is in this way deformed when used, it is preferable that it be formed of a highly rigid substance.

It is also preferable that the mirror portion 12 be formed of an electrically conductive substance. The reason is that forming the mirror portion 12 with an electrically conductive substance eliminates the need to separately provide electrodes and conductors needed to drive the piezoelectric elements 13. Specifically, it is preferable that the mirror portion 12 be formed of, for example, silicon, or a metal such as aluminum or iron.

The mirror portion 12 may be formed of a single material, or may be built by laying, on top of a base thereof formed of silicon, a coating layer of aluminum or the like serving as a mirror surface; alternatively, a plurality of layers may be formed on top of the base.

As shown in FIGS. 2A and 2B, the fitting portions 14 are bonded to edge parts of the support substrate 11 and the mirror portion 12, and thus serve to fix the mirror portion 12 to the support substrate 11. The fitting portions 14 are formed of, for example, glass or ceramic. In this embodiment, the fitting portions 14 are arranged in edge parts of the support substrate 11 and the mirror portion 12; however, no limitation to that arrangement is intended. In any case, however, the fitting portions 14 need to be arranged outside, i.e. closer to the edges of the mirror portion 12 than, the piezoelectric elements 13.

In this embodiment, the fitting portions 14 are separated from the support substrate 11; instead, the support substrate 11 and the fitting portions 14 may be integrally formed, and any other modifications in shapes etc. are possible within the scope of the object of the invention. With a view to preventing distortion in the mirror surface of the mirror portion 12, it is preferable that the fitting portions 14 be given equal heights. It is also preferable that the relationship between the heights of the fitting portions 14 and the piezoelectric elements 13 be adjusted so as not to produce distortion.

As shown in FIGS. 2A and 2B, the piezoelectric elements 13 are sandwiched between the support substrate 11 and the mirror portion 12; moreover, for example as shown in FIG. 2A, four of the piezoelectric elements 13 are arranged in cross-shaped directions (in the X and Y directions in the figures). In each of the cross-shaped directions, the two piezoelectric elements 13 are arranged symmetrically about the intersection of the cross. At what distances from the intersection of the cross to arrange the piezoelectric elements 13 are determined according to a predetermined formula. This will be described later.

The piezoelectric elements 13 expand or contract when voltages are applied thereto from above and below them as seen in FIG. 2B, and thereby, through vertical displacement, deform the mirror surface of the collimator lens 3. The piezoelectric elements 13 are formed of, for example, PZT (lead zirconate titanate, $Pb(Zr_xTi_{1-x})O_3$). However, no limitation to PZT is intended; instead, any other piezoelectric ceramic may be used, or a piezoelectric polymer or the like such as polyvinylidene fluoride may be used.

The electrodes needed to drive the piezoelectric elements 13 are arranged, for example, as follows. First, the electrodes at the lower ends of the piezoelectric elements 13 are formed by vapor-depositing, for example, a Au layer on the elevations 15 that are provided, to arrange the piezoelectric elements 13 thereon, on the support substrate 11. These electrodes are connected to, for example, a conductor pattern formed on the support substrate 11. On the other hand, for example, the electrically conductive mirror portion 12 itself serves as the electrode at the upper ends of the piezoelectric elements 13.

In this embodiment, the piezoelectric elements 13 have the shape of a prism. However, no limitation to that shape is intended; instead, at the top ends thereof, the piezoelectric elements 13 may have, for example, the shape of a rectangular parallelepiped or cylindrical column.

Next, how the piezoelectric elements 13 are arranged on the support substrate 11 will be described in detail. For example, in a case where, as described above, an optical pickup device is built with a variable-shape mirror having four piezoelectric elements arranged on a support substrate evenly and symmetrically in cross-shaped directions, since the variable-shape mirror is usually arranged inclined relative to the optical axis, it is impossible, simply by driving the four piezoelectric elements with equal voltages to deform the mirror surface of the variable-shape mirror into a spherical shape, to correct for spherical aberration. Thus, it is necessary, for example, to make different the voltages with which the individual piezoelectric elements are driven. In this case, however, for example to correct for wavefront aberrations by the use of the variable-shape mirror, it is necessary to make greatly different the voltages applied to the piezoelectric elements, and thus it becomes necessary, for example, to prepare amplifiers with different gains.

Increasing the number of amplifiers in this way, however, causes inconveniences as by increasing the number of components of the optical pickup device or by complicating its design. To avoid this, according to the present invention, through a simulation employing the finite element method, the arrangement of the piezoelectric elements 13 on the support substrate 11 was studied in search of one that permits correction for spherical aberration even when all the piezoelectric elements 13 arranged on the support substrate 11 were driven with equal voltages.

The simulation employing the finite element method was performed by the use of the optical system shown in FIG. 3. FIG. 3 is a schematic diagram of the optical system. The light beam emitted from a laser light source 2 is converted into parallel light by a collimator lens 3. The parallel light is then reflected by a variable-shape mirror 6, and is then condensed by an objective lens 7 on an optical recording medium 8. In this optical system, the variable-shape mirror 6 is arranged at an orientation as shown in FIG. 4. FIG. 4 is a perspective view of the variable-shape mirror 6, the objective lens 7, and the optical recording medium 8 shown in FIG. 3. The X direction in FIG. 4 corresponds to, in FIG. 3, the direction from which one sees the optical pickup device and, on the mirror surface of the variable-shape mirror 6, the direction perpendicular to the X direction is the Y direction. That is, the direction perpendicular to the travel direction of the light beam emitted from the light source is the X direction on the mirror surface, and the direction perpendicular to the X direction on the mirror surface is the Y direction on the mirror surface.

The positions of the variable-shape mirror 6, the objective lens 7, and the optical recording medium 8 relative to each other were designed, for example, as shown in FIG. 5. FIG. 5 is a schematic cross-sectional view illustrating the positional relationship among the variable-shape mirror 6, the objective lens 7, and the optical recording medium 8. As shown in FIG. 5, the simulation was performed under the following conditions: the distance from the center of the variable-shape mirror 6 to the lower vertex of the objective lens 7 was 1.0 mm; the maximum thickness of the objective lens 7 was 1.7 mm; the distance from the objective lens 7 to the optical recording medium 8 was 0.45 mm.

FIG. 6 is a diagram illustrating the inclination of the variable-shape mirror 6 relative to the optical axis during the simulation. Here, θ represents the angle (hereinafter "mirror angle") between the travel direction of the light beam emitted from the laser light source 2 and the mirror surface (or the support substrate) of the variable-shape mirror 6. While the mirror angle θ was varied from 15°, to 30°, to 45°, to 60°, and to 75°, at each of these angles, by the use of the optical system described above, the relationship between the X-direction and Y-direction curvatures of the mirror surface of the variable-shape mirror 6 that eliminated the spherical aberration (theoretically, corresponding to 75mλ) produced, for example, when the substrate thickness of the optical recording medium 8 varied by 0.05 mm from 0.1 mm was calculated by the finite element method, while the X-direction and Y-direction curvatures were also varied.

FIG. 7 shows the results calculated by the finite element method, with the horizontal axis representing the mirror angle and the vertical axis representing the ratio (KX / KY) of the X-direction curvature to the Y-direction curvature. Then, the curve described by those results was approximated with an equation, which showed that the curvature ratio (KX / KY) fulfilled the following relationship (indicated by a broken line in FIG. 7):

$$KX / KY = (\cos 2\theta + 1) / 2,$$

where $0 < \theta < 90°$.

Incidentally, even when the positions of the variable-shape mirror 6 and the objective lens 7 relative to each other are varied, though some light may be lost, no ray conditions vary, and thus the above equation holds. Likewise, even when the light incident on the variable-shape mirror 6 are not parallel; the above equation holds. Furthermore, even when the objective lens 7 is designed differently than described above, the above equation holds.

Thus, when the mirror angle of the variable-shape mirror arranged on the optical pickup device is determined, the ratio of the X-direction and Y-direction curvatures of the mirror surface of the variable-shape mirror that can correct for the spherical aberration produced in the optical pickup device is determined. Hence, by the finite element method, the arrangement of the piezoelectric elements 13 in a case where all the four piezoelectric elements 13 of the variable-shape mirror 6 of the embodiment descried above are driven with equal voltages can further be calculated.

In the optical pickup device 1 (see FIG. 1) of this embodiment, the mirror angle is 45°. Thus, in the variable-shape mirror 6, the arrangement of the piezoelectric elements 13 (see FIG. 2A and 2B) that permits correction for spherical aberration is such that the ratio of the X-axis curvature to the Y-axis curvature on the mirror surface of the variable-shape mirror 6 equals 1 : 2. Accordingly, with the variable-shape mirror 6 sized, for example, as shown in FIG. 8, and assuming that the load produced when the four piezoelectric elements 13 were driven with equal voltages was 1N, by the finite element method, while the arrangement of the piezoelectric elements 13 was varied, the point where the ratio of the X-direction and Y-direction curvatures of the mirror surface of the variable-shape mirror 6 became equal to 1 : 2 was calculated. FIG. 8 is a front view of the variable-shape mirror 6 as seen from the mirror surface side thereof. In the figure, hatching indicates the part of the mirror surface of the variable-shape mirror 6 that does not move.

The simulation shows the following: as indicated by broken-line circles in FIG. 8, when the X-direction piezoelectric elements 13 (see FIGS. 2A and 2B) are arranged at distances of $\pm3$ mm from the center of the mirror surface and the Y-direction piezoelectric elements 13 are arranged at distances of $\pm7$mm from the center of the mirror surface, the ratio of the X-direction and Y-direction curvatures of the mirror surface of the variable-shape mirror 6, as obtained when the four piezoelectric elements 13 are driven with equal voltages, equals 1 : 2. According to this calculation result, the piezoelectric elements 13 are arranged in the variable-shape mirror 6 of the embodiment. The variable-shape mirror 6 may be sized in any other manner than specifically sized in the embodiment; that is, its size may be varied within the scope of the object of the invention.

In this embodiment, the fitting portions 14 are arranged fixedly in edge parts of the mirror portion 12, and where to arrange the piezoelectric elements 13 is determined through calculation. Since the curvatures of the mirror surface of the variable-shape mirror 6 depend on the positional relationship between the piezoelectric elements 13 and the fitting portions 14, it is alternatively possible to previously fix the positions of the piezoelectric elements 13 and then vary the positions of the fitting portions 14 to determine the arrangement of the piezoelectric elements 13 and the fitting portions 14.

In the embodiment described above, the variable-shape mirror 6 has the shape of a perpendicular parallelepiped as a whole. However, no limitation to that shape is intended; any modifications are possible within the scope of the object of the invention. For example, the support substrate 11, the mirror portion 12, etc. may be formed circular; the support substrate 11 may be formed larger than the mirror portion 12.

With the optical pickup device 1 employing the variable-shape mirror 6 structured as described above, the spherical aberration of the light beam emitted from the laser light source can be corrected for by applying equal voltages commensurate with the magnitude of the aberration to all the piezoelectric elements 13 provided in the variable-shape mirror 6.

## Claims

1.  An optical pickup device including:

    a variable-shape mirror (6) that reflects a light beam emitted from a light source (2) and that, by use of piezoelectric elements (13) sandwiched between a support substrate (11) and a mirror portion (12) arranged to face the support substrate, corrects for wavefront aberrations in the light beam by deforming a mirror surface of the mirror portion; and
    converging means (7) for directing, while condensing, the light beam reflected from the variable-shape mirror to a recording surface of an optical recording medium (8),

    **characterized in**
    **that**, let a direction perpendicular to a travel direction of the light beam emitted from the light source be an X direction on the mirror surface and let a direction perpendicular to the X direction be a Y direction on the mirror surface, the mirror surface is inclined about the X direction such that the mirror surface forms a predetermined angle relative to the travel direction of the light beam emitted from the light source,
    **that** the piezoelectric elements are arranged substantially symmetrically about a center axis of the mirror surface, with two of the piezoelectric elements arranged in the X direction and another two of the piezoelectric elements arranged in the Y direction, and
    **that** the piezoelectric elements are arranged on the support substrate such that, when all the piezoelectric elements are driven with equal voltages, a curvature of the mirror surface in the X direction relative to a curvature of the mirror surface in the Y direction fulfills a predetermined curvature ratio.

2.  The optical pickup device of claim 1, wherein
    let the predetermined angle be $\theta$, let the curvature in the X direction be KX, and let the curvature in the Y direction be KY, the piezoelectric elements are arranged such that the ratio fulfills, as the predetermined curvature ratio, KX / KY = (cos $2\theta$ + 1) / 2, where $0 < \theta < 90°$.

3.  The optical pickup device of claim 1 or 2, wherein
    if the predetermined angle equals 45°, the piezoelectric elements are arranged such that the predetermined curvature ratio equals 1/2.

4.  The optical pickup device of one of claims 1 to 3, wherein
    between the light source and the variable-shape mirror, collimating means (3) is provided for converting the light beam emitted from the light source into parallel light.

5.  The optical pickup device of one of claims 1 to 4, wherein
    on extension lines in the Y and X directions in which the piezoelectric elements are arranged, fixing portions (14) for fixing the mirror portion to the support substrate are arranged so as to correspond to the piezoelectric elements.

FIG. 1

## FIG. 2A

## FIG. 2B

FIG. 3

FIG. 4

Y-DIRECTION

X-DIRECTION

## FIG. 5

0.45mm

1.7mm

1.0mm

8

7

6

## FIG. 6

2

3

θ

6

## FIG. 7

## FIG. 8

# FIG. 9A  PRIOR ART

101

A

108

106

A

# FIG. 9B  PRIOR ART

101

106

104

108    105    105    102

**REFERENCES CITED IN THE DESCRIPTION**

**Patent documents cited in the description**

- JP H5333274 A
- JP 2005043544 A